Europäisches Patentamt

European Patent Office

Office européen des brevets

(11) Publication number: **0 615 396 A1**

## EUROPEAN PATENT APPLICATION

(21) Application number: **94200546.3**

(22) Date of filing: **03.03.94**

(51) Int. Cl.⁵: **H04Q 7/04**, H04B 7/26

(30) Priority: **11.03.93 IT MI930466**

(43) Date of publication of application:
**14.09.94 Bulletin 94/37**

(84) Designated Contracting States:
**DE ES FR GB IT NL**

(71) Applicant: **ITALTEL SOCIETA ITALIANA TELECOMUNICAZIONI s.p.a.**
**P.le Zavattari, 12**
**I-20149 Milano (IT)**

(72) Inventor: **Lovati, Giovanni**
**Via Boeri 11**
**I-20141, Milan (IT)**

(74) Representative: **Giustini, Delio**
**c/o Italtel Società Italiana**
**Telecomunicazioni s.p.a.**
**P.O. Box 10**
**I-20019 Settimo Milanese (MI) (IT)**

(54) **Method and apparatus for seamless handover in a digital private telephoney system.**

(57) Method for the realization of the so-called "seamless handover", that is the time slot change without solution of continuity in the vocal signal in a digital private cordless telephony system, in particular in the DECT system.

The radio fixed part for the implementation of this method provides for the use of a digital signal processor (DSP) comprising as many ring buffers (RB) as the number of time slots of the DECT half frame. These ring buffers (RB) contain in any moment the ADPCM samples relative to 10 msec of the vocal signal, where each sample is written cancelling the oldest previous sample so that in any moment each one of the ring buffers (RB) contains the most recent samples.

Fig.4

Rank Xerox (UK) Business Services
(3.10/3.09/3.3.4)

Field of the Invention

The present invention relates to a method for the realization of the so-called "seamless handover", that is the time slot change without solution of continuity in the vocal signal in a digital system of private or cordless telephony. The invention will be preferably applied in the system known as DECT (Digital European Cordless Telephone).

The systems of private telephony comprise a plurality of radio fixed parts in order to cover the interested area and connected to a switching network which may be the public one or a so-called PAXB, and portable subscriber parts able to be connected to the radio fixed parts through a radio link, and therefore the portable parts are able to communicate with each other and with other fixed subscriber equipments connected to the public telephone network. The connections may be of the vocal type or they may allow the exchange of data occupying the equivalent of one or more vocal "channels".

The area covered by a base station or cell is generally rather reduced covering sometimes just the radius of some tens or hundreds of meters. Typical application of cordless telephony systems can be found in industrial plants where they may replace the installation of a wired network, in commercial or urban centres where they may advantageously replace public telephone boxes, and others more.

The telecommunication network for the cordless telephony is a digital one. The radio access belongs to the category FDMA - TDMA - TDD.

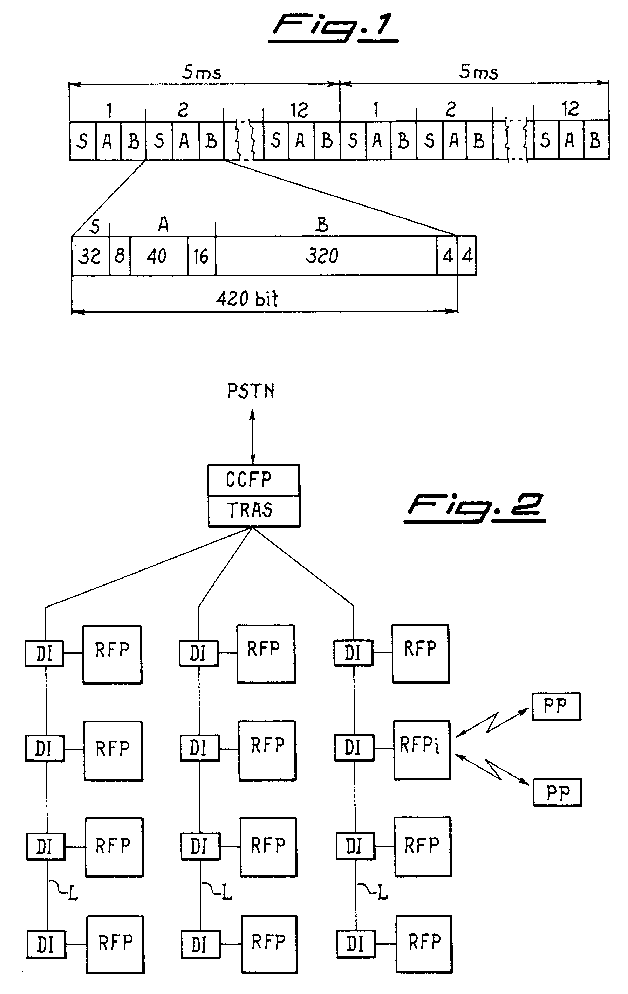

The system is a TDD one as the transmission and the reception do not occur simultaneously. More exactly, as illustrated in figure 1, the basic frame of 10 milliseconds is divided in two halves, and during the first 5 ms the base station emits and the portable phones receive a half frame (half frame TX DECT), and in the following 5 ms occurs the contrary (half frame RX DECT). Each half frame is set up by 12 channels (1, 2,..., 12) or time slots (TDMA), each one of which is set up by 420 (or according to the cases by 424) bits. The channels are transmitted or received using 10 different frequencies (FDMA) for a total of 120 channels available to the system, which are naturally reassigned to cells sufficiently distant one from the other in order not to create any interference problems. Each time slot is subdivided in a synchronism field S of 32 bits, in a field A of 8 + 40 bits with relative 16 control bits, and in a field B of 320 bits where the bits are allocated which are obtained by coding the vocal samples of a corresponding subscriber.

A possible DECT network structure is schematically illustrated by way of example in figure 2.

It comprises groups of four radio fixed parte RPF connected to branches set up by connection or ridge lines L through drop/insert devices DI. Each radio fixed part RFPi may handle a certain number of Portable Parts PP, which are generally mobile. The three branches for a total of 12 radio fixed parts RFP are connected to a battery of transcoders TRAS, and this last one is connected to the public network PSTN (Public Switching Telephone Network) through a central control fixed part CCFP. In some applications the functions carried out by the CCFP may be inserted in a line card of a switching centre or of a PABX.

The interface between the CCFP and the DECT network for what regards the vocal signal is normally set up by digital channels of 64 kbit/sec. (8,000 sample/sec. each one codified by means of 8 bits). To the CCFP unit a battery of transcoders TRAS is connected which provides for the conversion of the PCM code on eight bits used on the PSTN side into an Adaptive Differential Pulse Code Modulation ADPCM on four bits used on the DECT side. The link (bidirectional) at 2.048 Mbit/sec. connecting the CCFP to the different radio fixed parts RFPs supports therefore 48 voice channels plus a predetermined number of synchronism and signalling channels.

In the DECT system the vocal service is supported by the activation of a logical channel called "In minimum delay" on which every 10msec. the bits representing the 80 samples relative to a vocal segment of 10 msec. are transmitted into one of the twelve time slots setting up the TDMA DECT frame. These samples together set up a block of 320 bits per frame which is transmitted via radio to the portable part PP in the field B of the DECT slot (see also figure 1).

For what concerns the transmission from PP towards RFP the information transfer procedure is exactly symmetric except the fact that the second DECT half frame (RX DECT Frame) with TDD modality is used.

Once the communication on a determined physical channel is activated the part PP carries out anyhow a monitoring of all available channels measuring the received power, quality, etc.

After this evaluation, the portable part PP defines that the occupied channel became of a too poor quality with respect to the other available channels, and therefore asks the radio fixed part RFP for the assignment of another channel. This defines the beginning of a handover procedure, that is the assignment of another channel to carry on the communication.

For a certain time in this case it is stated that both channels remain active and during this time the portable part can use anyone of the two received packets.

Within a predetermined time gap, and decided by the radio fixed part, one of the two channels (normally the original one) is abandoned and the communication continues on the channel estimated to be of better quality.

As the two channels are associated to two different time slots, these are received at different times: more exactly the slot k-th is received with a delay of about 416.(K-n) sec. compared to the slot n-th. In order to avoid that the conversation between the users is disturbed during the transition, it is necessary that the data included in the segments assigned to the two different slots correspond to a vocal signal out of phase of a predetermined entity.

Object of the Invention

It is the object of the present invention is to obtain in a simple and efficient way the above said phase shift so that the subscriber will not have to support any disturbances deriving from the handover.

Disclosure of the Invention

The invention relates more precisely to a method for the seamless handover in a cordless DECT system where the vocal samples of each one of the active subscribers are codified on four bits and inserted in a ADPCM frame to be transferred into corresponding time slots of a DECT half frame, characterised by the following steps:

- memorizing, for each one of the active channels of the DECT half frame, in at least one corresponding ring memory a sequence of four bits samples relative to 10 msec. of vocal signal, where each sample is written cancelling the previous older sample in a way that in any moment there will be the most recent samples contained in each one of the memories;

- linking, in absence of handover requests, to each ring memory a first time slot of the DECT half frame commanding in this way the transfer of the content of each memory to the interested subscriber at the moment defined by the synchronism pulse of said first DECT time slot;

- linking, in presence of a handover request relative to a generic channel, to the ring memory corresponding to that channel said first time slot as well as a second time slot of the DECT half frame commanding so the transfer of the content of the relative ring memory to the interested subscriber in the moment defined by the synchronism pulse of the first or second time slot of the DECT half frame.

It is also object of the present invention a radio fixed part for the seamless handover in a cordless DECT system where the vocal samples of each one of the active subscribers are codified on four bits and inserted in an ADPCM frame to be grouped and transferred into the available time slots of a transmission DECT half frame, characterized in that it comprises:

- an analog/digital converter suitable to convert a line code into binary signals;
- a PCM signal reception unit connected to the output of the analog/digital converter and suitable to render available:
  i) on a first output the data allocated in the ADPCM frame;
  ii) on a second output a synchronous clock with the above-mentioned data;
  iii) on a third output a synchronism pulse defining the beginning of the ADPCM frame;
- a digital signal processor connected to said PCM signal reception unit;
- a radio frequency unit connected to said processor and to an antenna;
- a PCM signal transmission unit connected to said second or third output of the PCM signal reception unit as well as to said processor;
- a digital/analog converter suitable to convert the available digital signals at the output of the PCM signal transmission unit in a line code.

Bried Description of the Drawings

Further advantageous characteristics are the subject of the appended claims.

Now the invention, together with further object and advantages thereof, may best be understood by making reference to the following description taken together with the enclosed drawings, wherein:

the already described figure 1 shows the organization of a DECT frame;

the already described figure 2 is a general scheme showing the structure of a cordless system of the DECT type;

figure 3 shows a block diagram of a radio fixed part RFP of figure 2;

figure 4 shows same parts of the DSP unit of figure 3;

figures 5A - 5C illustrate the transceiving 4 bits of sample procedure according to the method of the present invention.

Detailed Description of the Preferred Embodiment

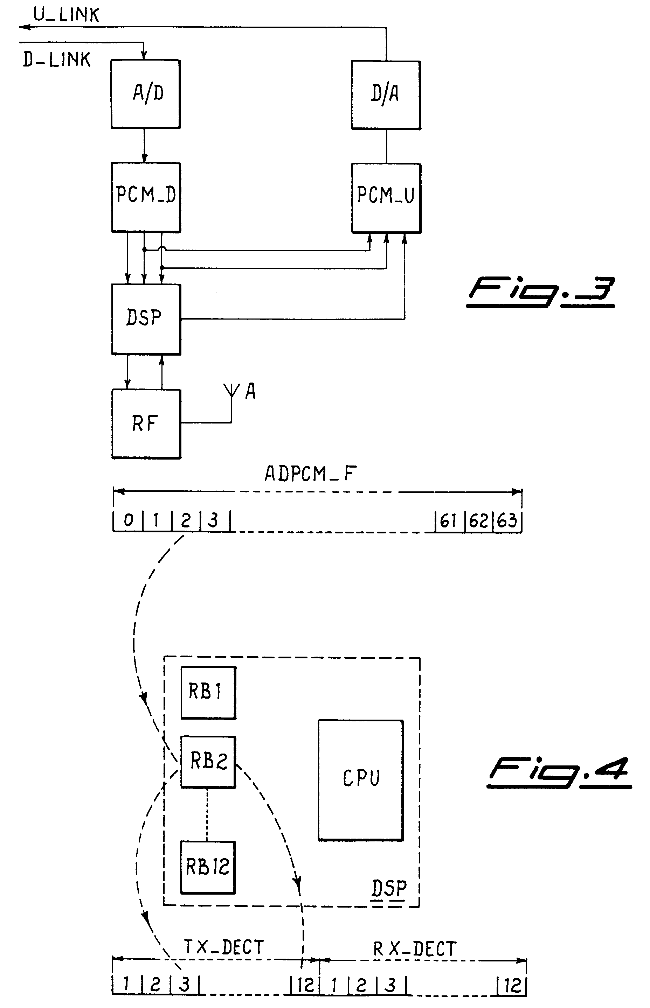

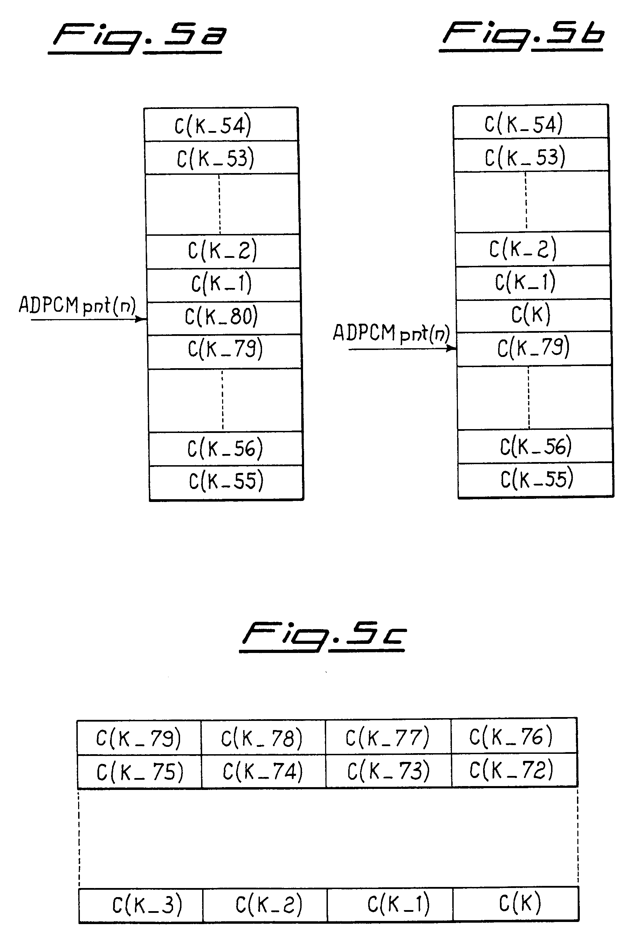

Referring to the figures and in particular to the block scheme of figure 3 it can be observed that each one of the RFP units consists according to the invention of a pair of converters and in particular of an A/D converter to which the down-link ridge D-LINK is connected and of a D/A converter to which the up-link ridge U-LINK is connected. The A/D unit provides for the conversion of the line code present on the ridge D-LINK in digital signal while the D/A unit provides for the carrying out of the opposite operation.

To the A/D unit a PCM down-link unit PCM_D is connected, suitable to make available on three outputs the following:
- the data allocated in the ADPCM frame;
- a clock in phase with the data itself;
- a synchronism pulse defining the beginning of the ADPCM frame.

To the PCM_D unit a DSP unit (Digital Signal Processor) is connected providing for the reading of the data extracted from the ADPCM frame as specified before and for the allocation in corresponding time slots of the DECT half frame as it will become clearer hereafter with reference to figure 4. In fact to the DPS unit a radio frequency unit RF is connected providing for the transmission of data allocated in the TX-DECT half frame to the antenna A.

In the other transmission direction the data allocated in the RX-DECT half frame are supplied by the RF unit to the DSP unit providing for they forwarding to an up-link PCM unit PCM_U receiving from the PCM_D unit the clock and the synchronism pulse of the ADPCM frame. The unit PCM_U provides for the insertion of the data received as specified before in the ADPCM frame through said converter D/A.

Referring to figure 4, the frame ADPCM-F identify the bidirectional ridge at 2.048 Mbit/sec on which the samples relative to the vocal signal of each active subscriber are transmitted from the common control fixed part CCFP to the different radio fixed part RFP and viceversa.

This vocal signal is at the origin sampled with a frequency of 8.000 samples/ second, and after that compressed by a technique of the ADPCM type at 32 Kbit/sec so that 10 msec. of voice consist finally of 80 samples, each one set up by 4 bits. The 80 samples received by the frame ADPCM for total of 320 bits are collected in the DSP unit and inserted in the B field of one of the 12 slots of the TX DECT half frame; the 320 bits extracted from the corresponding slot of the RX DECT half frame instead are subdivided into 80 samples of 4 bits each and sent on to the ADPCM frame with a periodicity of 125 $\mu$sec.

According to the invention the processor DSP comprises for each one of the active channels and up to a maximum of 12 channels a buffer with a capacity of 80.4 bits corresponding to 10 msec of voice. These buffers RB1, ..., RB 12 are of the ring type or each new sample is written by cancelling the oldest preceding sample in a way that in any moment each buffer of the DSP unit contains the 80 most recent vocal samples of the subscriber associated to it. When the synchronism (signal S of figure 1) of each time slot of the DECT frame is received, the DSP collects the 320 bits from the corresponding buffer and builds the frame to be sent to the radio interface.

The functioning of the handover using the method according to the invention will now be described always with reference to figure 4.

At the first activation of a channel, for example channel 2 of the ADPCM frame , the DSP provides for the association of the data relative to said channel to the time slot k-th (for example slot 3) of the TX-DECT frame, and every 125 $\mu$sec it collects the corresponding four bits, transfers them into a ring buffer (for example RB2) and releases the previous 4 bits (in the figure this association is indicated by a hatched line).

When the portable part starts an handover procedure and asks for the assignment of a further channel (for example channel 12), the DSP will allocate in this channel also the same data arriving from channel 2 of the ADPCM frame and memorised in the RB2 buffer.

Therefore occurs the condition that the subscriber interested by said handover procedure receives initially the content of time slot 3 of the TX-DECT frame, but after the beginning of the handover procedure, in correspondence of the synchronism pulse of channel 12, it receives the content of that time slot which is collected always by the same register RB2. But it must be observed that during the lapse of time passing between the synchronism pulse of time slot 3 and the synchronism pulse of time slot 12 the content of the register RB2 undergoes an updating so that the interested subscriber receives the 80 most recent vocal samples (differing from the samples allocated in the same register RB2 at the moment of the reception of the synchronism pulse of channel 3), and consequently it does not point out any discontinuity in the received signal. In other words thanks to the use of the ring buffer RB with the capacity of 80 x 4 bits the subscriber receives, after the handover procedure the 80 most recent vocal samples so that in order to obtain automatically the phase shift foreseen by the DECT specifications with reference to the data contained in the two time slots assigned to said subscriber.

Without departing from the ambit of the invention it turns out to be possible to connect - at the moment of a handover procedure request - two ring buffers RB to a single time slot of the ADPCM frame. Or the content of the time slot i of the ADPCM frame interested by a handover procedure is in this case transferred into two ring buffers RB which are at their time connected to the same number of time slots of the TX-DECT frame, and in correspondence of the synchronism pulse of the second of said slots the content of the ring buffer coupled with said second time slot is sent to the subscriber.

The procedure for the seamless handover according to the invention will become clearer by the following description considered together with the figures from 5A to 5C.

At the moment of the communication activation, a ring buffer of an amplitude equal to 80.4 bits and the relative pointer ADPCMpnt (n) are linked to the n-th slot (with n = 0 ... 63) of the ADPCM frame. The table of figure 3A shows the situation of the buffer before the reception of a generic sample k-th, while the table of figure 3B shows the situation of the buffer after the reception of a generic sample k-th.

If at this moment the DSP processor receives a DECT slot synchronism pulse (figure 1) it collects the 320 bits contained in the buffer from the previous location to that pointed by ADPCPpnt(n) and sends the B field illustrated in figure 5C to the radio interface of the RFP station.

During the preliminary handover procedure described before to the same slot n-th on the ADPCM frame is connected a further slot in the DECT frame. If i and j are the numbers corresponding to said slots (with i, j = 1 ... 12) the synchronism pulses corresponding to the two active channels turn out to be phase shifted by 5.(j-i)/12 msec or by 5.8.(j-1)/12 samples on the ADPCM frame.

If on the synchronism signal relative to the slot i-th the buffer contains the samples from (k-79) to (k) on the synchronism related to the slot j-th the buffer itself will contain the samples from $((k-79 + 10/3 . (j-i)$ to $(k- 10/3 . (j-i))$ realizing in this way the necessary phase shifting to avoid discontinuity.

The procedure turns out to be symmetric in the case of transmission from PP to RFP. The two blocks of 320 bits (field B) received by the portable part PP will contain the same informations without the phase shift described before. Whichever of the two blocks can be indifferently used for the periodical transmission of samples on the ADPCM frame towards the CCFP.

It is evident that the above described is given as a not limiting example. Variations and modifications are possible without departing from the protection of the following claims.

## Claims

1. Method for the seamless handover in a cordless DECT system wherein the vocal samples of each one of the active subscribers are codified on four bits and inserted in an ADPCM frame in order to be grouped and transferred into corresponding time slots of a half frame DECT and vice versa, characterized by the following steps:
   - memorising, for each one of the active channels of the DECT half frame in at least one corresponding ring buffer a sequence of four bits samples relative to 10 msec. of vocal signal, where each sample is written cancelling the previous older sample so that always the most recent samples are contained in each one of the ring buffers;
   - linking, in the absence of a handover request, to each ring buffer a first time slot of the DECT half frame commanding therefore the transfer of the content of each memory to the interested subscriber at the moment defined by the synchronism pulse of said first DECT slot;
   - linking, in the presence of a handover request related to a generic channel, to the ring buffer corresponding to that channel either said first time slot or a second time slot of the DECT half frame commanding so the transfer of the content of the relative ring buffer to the subscriber having started off the handover procedure in correspondence to the synchronism pulse of the first or second time slot of the DECT half frame.

2. Method according to claim 1, characterized in that in presence of a handover request the vocal samples of the ADPCM frame related to the subscriber interested by said request are grouped in a first and in a second ring buffer and the interested subscriber receives the samples allocated in the second ring buffer in correspondence of the synchronism pulse of the second channel of the DECT half frame.

3. Radio fixed part for the seamless handover in a cordless DECT system wherein the vocal samples of each active subscriber are codified on four bits and inserted in a ADPCM frame for being grouped and transferred into the available time slots of a transmission half frame DECT, characterized in that it comprises:
   - an analog/digital converter (A/D) suitable to convert a line code (HDB3) into binary signals;
   - a PCM signal reception unit (PCM__D) connected to the output of the analog/digital converter (A/D) and suitable to render available:

i) on a first output the data allocated in the ADPCM frame;

ii) on a second output a synchronous clock with the above-mentioned data;

iii) on a third output a synchronism pulse defining the beginning of the ADPCM frame;

- a digital signal processor (DSP) connected to said PCM signal reception unit (PCM_D);

- a radio frequency unit (RF) connected to said processor (DSP) and to an antenna (A);

- a PCM signal transmission unit (PCM_U) connected to said second and third output of the PCM signal reception unit (PCM_D) as well as to said processor (DSP);

- a digital/analog converter (D/A) suitable to convert the digital signals available at the output of the PCM signal transmission unit in a line code (HDB3).

4. Radio fixed part according to claim 3, characterized in that said processor (DSP) comprises as many ring buffers (RB1, ..., RB12) as the numbers of time slot contained in a DECT half frame, these ring buffers being suitable to memorize a sequence of four bits samples corresponding to 10 msec of vocal signal, where each sample being written cancelling the preceding older sample so that at any moment there are the most recent samples are contained in each one of the ring buffer,

characterized moreover in that said ring buffers (RB) are, in absence of a handover request, linked to at least one first time slot of the DECT half frame, and they are read at the moment defined by the synchronism pulse (S) of the channel linked to them,

characterized further in that, in presence of a handover request relative to a generic time slot, said ring buffers (RB) are linked either to said first time slot of the DECT half frame and to a second time slot always of the DECT half frame, commanding so the transfer of the content of the relative ring buffer to the subscriber having started off the handover procedure in correspondence of the synchronism pulse of said first or second time slot.

5. Radio fixed part according to claim 4, characterized in that in presence of a handover request the vocal samples of the ADPCM frame related to the subscriber interested by such request are grouped in a first and in a second ring buffer (RB), and the interested subscriber receives the samples allocated in the second ring buffer (RB) in correspondence of the synchronism pulse of the second slot of the DECT half frame.

## Fig.1

## Fig.2

U_LINK

D_LINK

A/D

D/A

PCM_D

PCM_U

DSP

RF

A

*Fig.3*

ADPCM_F

| 0 | 1 | 2 | 3 | | 61 | 62 | 63 |

RB1

RB2

CPU

RB12

DSP

*Fig.4*

TX_DECT

RX_DECT

| 1 | 2 | 3 | | 12 | 1 | 2 | 3 | | 12 |

# Fig.5a

| |
|---|
| C(K_54) |
| C(K_53) |
| |
| C(K_2) |
| C(K_1) |
| C(K_80) |
| C(K_79) |
| |
| C(K_56) |
| C(K_55) |

ADPCM pnt(n) →

# Fig.5b

| |
|---|
| C(K_54) |
| C(K_53) |
| |
| C(K_2) |
| C(K_1) |
| C(K) |
| C(K_79) |
| |
| C(K_56) |
| C(K_55) |

ADPCM pnt(n) →

# Fig.5c

| C(K_79) | C(K_78) | C(K_77) | C(K_76) |
|---------|---------|---------|---------|
| C(K_75) | C(K_74) | C(K_73) | C(K_72) |
| | | | |
| C(K_3) | C(K_2) | C(K_1) | C(K) |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | PATENT ABSTRACTS OF JAPAN vol. 17, no. 223 (E-1359) & JP-A-04 355 594 (KOKSAI ELECTRIC CO LTD) * abstract * | 1,3 | H04Q7/04 H04B7/26 |
| A | PATENT ABSTRACTS OF JAPAN vol. 13, no. 23 (E-705) & JP-A-63 226 134 (NIPPON TELEGRAPH & TELEPHONE CORPORATION) * abstract * | 1,3 | |
| A | TELCOM REPORT INTERNATIONAL, vol.16, no.2, 1 March 1993, DE pages 42 - 43 K.D.PILLEKAMP 'Digital cordless communication enters office and home' * page 42, right column, paragraph "Seamless handover" * | 1,3 | |
| A | MOTOROLA TECHNICAL DEVELOPMENTS, vol.16, August 1992, SCHAUMBURG, ILLINOIS US pages 161 - 163, XP000310401 C.J.MALEK ET AL. 'OPTIMAL BUFFER MAP FOR A TDMA HANDOFF' | | **TECHNICAL FIELDS SEARCHED (Int.Cl.5)** H04Q |
| X,P | EP-A-0 576 079 (PHILIPS ELECTRONICS N.V.) * column 1, line 13 - column 3, line 10 * | 1,2 | |

The present search report has been drawn up for all claims

| Place of search | Date of completion of the search | Examiner |
|---|---|---|
| THE HAGUE | 24 June 1994 | Behringer, L.V. |